**Europäisches Patentamt**

**European Patent Office**

**Office européen des brevets**

(19)

(11) Veröffentlichungsnummer : **0 349 830 B1**

(12) # EUROPÄISCHE PATENTSCHRIFT

(45) Veröffentlichungstag der Patentschrift :
**21.10.92 Patentblatt 92/43**

(51) Int. Cl.$^5$ : **B65G 15/02**, B65G 15/60, B65G 15/56

(21) Anmeldenummer : **89111261.7**

(22) Anmeldetag : **21.06.89**

(54) **Gurtkurve für Förderbandanlagen.**

(30) Priorität : **06.07.88 DE 3822824**

(43) Veröffentlichungstag der Anmeldung :
**10.01.90 Patentblatt 90/02**

(45) Bekanntmachung des Hinweises auf die
Patenterteilung :
**21.10.92 Patentblatt 92/43**

(84) Benannte Vertragsstaaten :
**AT BE CH DE ES FR GB IT LI NL SE**

(56) Entgegenhaltungen :
**DE-A- 3 641 809**
**DE-B- 2 055 682**
**DE-B- 2 723 033**
**FR-A- 2 560 168**

(73) Patentinhaber : **TRANSNORM SYSTEM GmbH**
**Förster Strasse 2**
**W-3207 Harsum (DE)**

(72) Erfinder : **Almes, Horst-Dieter**
**Einumer Strasse 78**
**W-3200 Hildesheim (DE)**
Erfinder : **Grutza, Bernd**
**Richard-Strauss-Strasse 48**
**W-3203 Sarstedt (DE)**

(74) Vertreter : **Arendt, Helmut, Dipl.-Ing.**
**Patentanwalt Bergiusstrasse 2 c**
**W-3000 Hannover 51 (DE)**

EP 0 349 830 B1

## Beschreibung

Die Erfindung betrifft eine Kurvenführung für Förderbandanlagen mit einem über kegelförmige Umlenkrollen umgelenkten Förderband, an dessen Außenrand eine zwischen paarweise angeordneten Führungsrollen geführte wulstartige Randleiste angebracht ist, wobei die Drehachsen der Führungsrollenpaare miteinander einen Winkel bilden und symmetrisch zum Förderband angeordnet sind, derart, daß die Drehachsen und die radial nach innen weisenden Seitenflächen der Randleiste an den Laufflächen der Rollen abgestützt sind.

Bei der Ausführung einer Einrichtung nach dem einleitend genannten Oberbegriff gemäß DE-PS 2 055 682 legen sich die zu beiden Seiten der Bandtrums schräg angeordneten Rollen mit ihren Laufflächen sicher gegen die Seitenflächen der Längswulst und geben dadurch dem Außenrand des Förderbandes eine Führung. Infolge der schrägen Anordnung der Rollen wirken die Kräfte, die das Förderband in Richtung auf den Mittelpunkt der Bandkurve ziehen so auf die Längswulst, daß diese mit einer starken Kraft zusammengedrückt wird , wodurch eine Selbsthemmung zwischen der Längswulst und dem Förderband hervorgerufen wird. Die Befestigungselemente zwischen der Randleiste und dem Fördergurt werden dadurch nicht beansprucht. Der Gurt wird durch die schrägen Rollen zentriert, die an den beiden Seiten angreifenden Kräfte sind gleich groß.

Bei der bekannten Ausführung befinden sich die Befestigungselemente für die Randleiste, beispielsweise Nahtfäden, zwischen den Angriffspunkten der Laufrollen und der radial äußersten Kante der Randleiste. Dadurch besteht die Möglichkeit, daß sich bei einer hohen Belastung mit erheblichen, radial einwärts gerichteten Zugkräften die radial innenliegenden Kanten der Randleiste aufwölben und im Sinne einer Öffnung umschlagen und eine rasche Zerstörung der Randleiste die Folge ist. Die zu einem solchen Ergebnis führenden, zwischen der Randleiste und den Laufrollen wirkenden Kräfte sind nicht genau definierbar, so daß eine Abhilfe schwierig ist.

Der Erfindung liegt die Aufgabe zugrunde, eine Gurtführung der eingangs genannten Gattung so auszubilden, daß die einzuleitenden Kräfte genauer erfaßt werden und insbesondere ein Umschlagen der Randleiste bei hohen Belastungen mit Sicherheit vermieden wird. Die Lösung dieser Aufgabe zeichnet sich dadurch aus, daß die Randleiste mit einem sich über ihre gesamte Länge erstreckenden flächigen Ansatz versehen ist, der sich, radial einwärts von den Kraftangriffspunkten der Führungsrollen an der Randleiste erstreckt und mit einem sich über die gesamte Länge des Förderbandes erstreckenden Gurtaufnahmeschlitzes versehen ist, über welchen das Förderband mit der Randleiste fest verbunden ist.

Bei der erfindungsgemäßen Ausführung liegen die Verbindungspunkte zwischen der Randleiste und dem Gurt radial einwärts von den Kraftangriffspunkten der Führungsrollen, so daß ein Umschlagen von Teilen der Randleiste vermieden wird, ohne die Klemmwirkung zwischen der Längswulst und dem Gurt zu beeinträchtigen. Die Konstruktion erlaubt eine genauere Erfassung der einzuleitenden Kräfte. Eine Stauchwirkung auf die Befestigungspunkte am Gurt entfällt, wobei dennoch die Verbindungen zwischen Randleiste und Gurt, beispielsweise eine Befestigungsnaht, durch die vertikalen Klemmkraftkomponenten entlastet werden.

Durch eine im wesentlichen ovale Ausbildung der Längswulst ist die Gurtkante im Bereich der Krafteinleitung konvex ausgebildet. Sie umfaßt das radial äußere Ende des Gurtes, bildet also einen geschlossenen Rand. Zur Aufnahme unterschiedlicher Gurtstärken ist das innere Ende des bis in die Längswulst reichenden Gurtaufnahmeschlitzes kreisförmig erweitert. Um die Anlagefläche der Laufrollen zu erhöhen und die Walkarbeit zu verringern, weist die Längswulst im Bereich der Krafteinleitung eine geringere Flächenkrümmung als in den übrigen Bereichen auf. In diesem Bereich ist auch die Materialstärke am größten und auf die Kraftübertragung angepaßt. Durch eine Verringerung der Materialstärke am Außenumfang, d. h. im radial äußersten Bereich, wird eine große Flexibilität erreicht, so daß die Randleiste bei Kurvenführungen mit unterschiedlichen Radien Verwendung finden kann.

In der Zeichnung ist ein Ausführungsbeispiel der Erfindung im Querschnitt dargestellt und nachstehend erläutert.

Es zeigen:

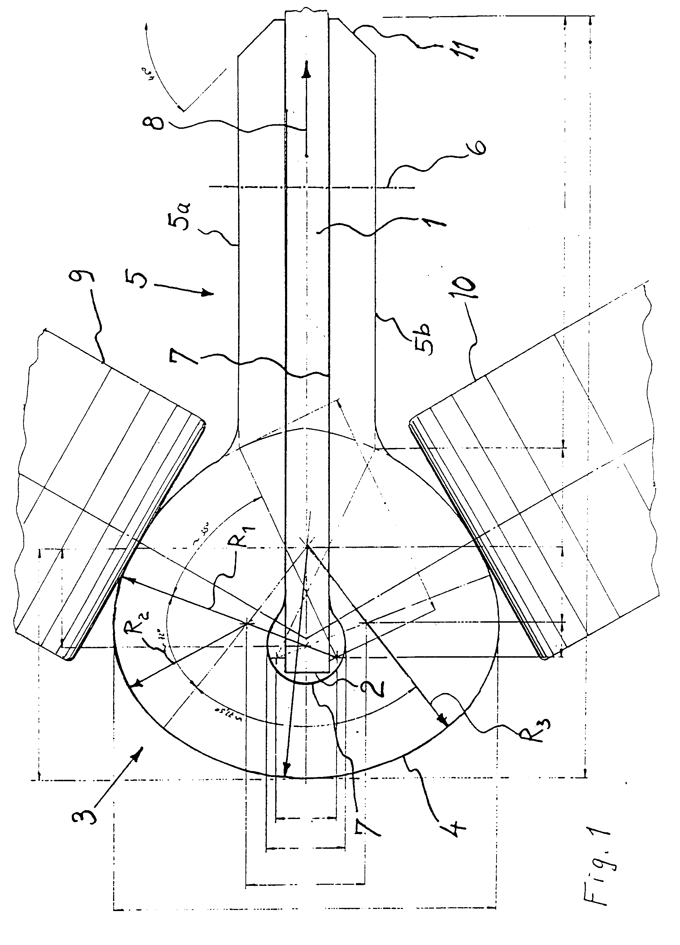

Fig. 1 einen Querschnitt und

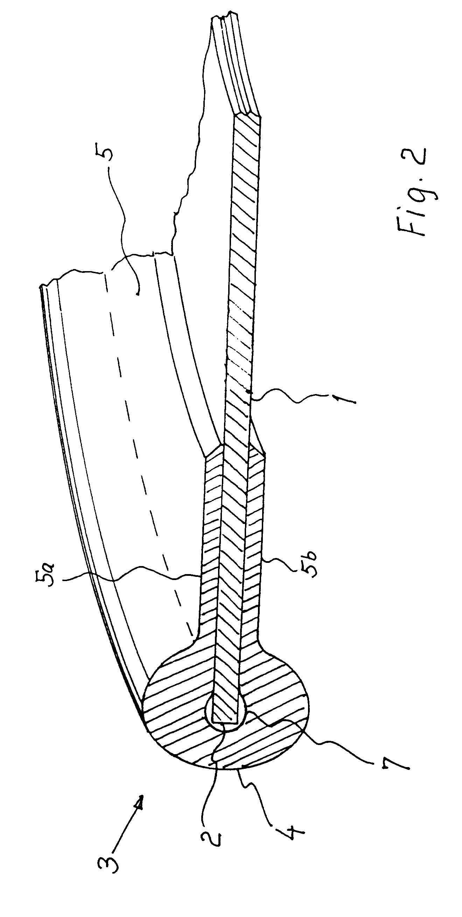

Fig 2 ein teilweises Schaubild der Gurtkurve.

Ein kurvenförmiges Förderband 1 wird an seiner radial äußeren Kante 2 von einer Randleiste 3 umfaßt. Sie besteht aus einem wulstförmigen äußeren Teil 4, nachstehend als Längswulst bezeichnet, und einem flächigen, im wesentlichen ebenen Ansatz 5, der beispielsweise mit dem Förderband bei 6 vernäht ist. Der Ansatz 5 besteht aus zwei Teilen 5a und 5b, die flächig an beiden Seiten des Förderbandes 1 anliegen. Das innere Ende des durch die beiden Teile 5a und 5b des Ansatzes gebildeten Gurtaufnahmeschlitzes ist an seinem inneren Ende kreisförmig erweitert und umfaßt die radial äußere Gurtkante 2 mit Abstand. Hierdurch wird sichergestellt, daß die Randleiste für Förderbänder mit unterschiedlichen Gurtstärken verwendet werden kann.

Durch den Zug des Förderbandes in Richtung des Pfeiles 8 wird die Längswulst zwischen die beiden Laufrollen 9 und 10 gezogen und eingeklemmt. Die Berührungspunkte zwischen der Längswulst und den Laufrollen und damit die Krafteinleitungspunkte befinden sich mit Abstand radial auswärts von der Verbindungsnaht 6 zwischen dem Fördergurt und der Randleiste. Dadurch ist sichergestellt, daß keine Kräfte auf die radial innenliegende Kante der Randleiste im Sinne einer Stauchwirkung ausgeübt werden können.

Die Längswulst ist im Querschnitt im wesentlichen oval gehalten. Die Wandstärken sind jedoch unterschiedlich groß. Im Bereich der Krafteinleitung ist die Wandstärke am größten, begleitet von einem größen Krümmungsradius, wodurch insgesamt eine Verringerung der Beanspruchung durch Senkung der Flächenpressung und damit Verringerung der Walkarbeit sichergestellt ist. In diesem Bereich ist der Krümmungsradius mit $R_1$ bezeichnet, der die Kontur des Längswulstquerschnittes, ausgehend vom Ansatz 5 über einen Winkel von etwa 35°, bildet. Diesem folgt bei dem gezeigten Beispiel ein etwas größerer Winkel mit einem kleineren Krümmungsradius $R_2$, der anschließend wieder in einen größen Krümmungsradius $R_3$ übergeht, der etwa die gleiche Größe, wie der Krümmungsradius $R_1$ aufweist. Im radial äußersten Bereich der Längswulst ist die Wandstärke am geringsten, so daß eine größere Flexibilität gewonnen wird, und eine Anpassung der Randleiste an Gurtkurven unterschiedlicher Radien möglich ist.

**Patentansprüche**

1. Kurvenführung für Förderbandanlagen mit einem über kegelförmige Umlenkrollen umgelenkten Förderband (1), an dessen Außenrand eine zwischen paarweise angeordneten Führungsrollen (9, 10) geführte wulstartige Randleiste (3) angebracht ist, wobei die Drehachsen der Führungsrollenpaare miteinander einen Winkel bilden und symmetrisch zum Förderband angeordnet sind, derart, daß die Drehachsen zum Außenrand (2) des Förderbandes hin divergieren und die radial nach innen weisenden Seitenflächen der Randleiste an den Laufflächen der Führungsrollen abgestützt sind, dadurch gekennzeichnet, daß die Randleiste (3) mit einem sich über ihre gesamte Länge erstreckenden flächigen Ansatz (5) versehen ist, der sirh radial einwärts von den Kraftangriffspunkten der Führungsrollen (9, 10) an der Randleiste (3) erstreckt und mit einem sich über die gesamte Länge des Förderbandes erstreckenden Gurtaufnahmeschlitz (7) versehen ist, über welchen das Förderband mit der Randleiste fest verbunden ist.

2. Kurvenführung nach Anspruch 1, dadurch gekennzeichnet, daß die Längswulst (4) der Randleiste wenigstens im Bereich der Krafteinleitung konvex ausgebildet ist.

3. Kurvenführung nach Anspruch 1 und/oder 2, dadurch gekennzeichnet, daß die Längswulst (4) die radiale Außenkante (2) des Förderbandes (1) umfaßt und einen im wesentlichen ovalen Querschnitt hat.

4. Kurvenführung nach Anspruch 2 oder 3, dadurch gekennzeichnet, daß die Längswulst (4) im Bereich der Krafteinleitung eine geringere Flächenkrümmung und einen stärkeren Wandquerschnitt aufweist als in den übrigen Bereichen.

5. Kurvenführung nach einem oder mehreren der Ansprüche 1 bis 4, dadurch gekennzeichnet, daß der Wandquerschnitt der Randleiste im radial äußersten Bereich am kleinsten ist.

6. Kurvenführung nach einem oder mehreren der Ansprüche 1 bis 5, dadurch gekennzeichnet, daß das innere Ende des Gurtaufnahmeschlitzes (7) zur Aufnahme unterschiedlicher Gurtstärken kreisförmig erweitert ist.

**Claims**

1. Curve guide for conveyor-belt installations with a conveyor belt (1) deflected by way of conical deflector rollers, on the outer edge of which conveyor belt there is fitted a bead-like skirt (3) guided between guide rollers (9, 10) arranged in pairs, whereby the axes of rotation of the pairs of guide rollers together form an angle and are arranged symmetrically to the conveyor belt in such a way that the axes of rotation diverge towards the outer edge (2) of the conveyor belt and the side faces of the skirt which point radially inward are supported on the running faces of the guide rollers, characterized in that the skirt (3) is provided with a laminar attachment (5) extending over its entire length, which extends radially inwardly from the points of force engagement of the guide rollers (9, 10) at the skirt (3) and is provided with a belt-receiving slot (7) extending over the entire length of the conveyor belt, by means of which slot the conveyor belt is firmly connected to the skirt.

2. Curve guide according to claim 1, characterized in that the longitudinal bead (4) of the skirt is constructed in a convex manner at least in the region of the force introduction.

3. Curve guide according to claim 1 and/or 2, characterized in that the longitudinal bead (4) encloses the radial outer edge (2) of the conveyor belt (1) and has a substantially oval cross section.

4. Curve guide according to claim 2 or 3, characterized in that in the region of the force introduction the longitudinal bead (4) has a smaller face curvature and a greater wall cross section than in the other regions.

5. Curve guide according to one or more of claims 1 to 4, characterized in that the cross section of the wall of the skirt is smallest in the radially outermost region.

6. Curve guide according to one or more of claims 1 to 5, characterized in that the inner end of the belt-receiving slot (7) is widened in the shape of a circle to accommodate different belt thicknesses.

parties.

5. Guide courbe selon l'une ou plusieurs des revendications 1 à 4, caractérisé en ce que la section de paroi de la bordure est la plus faible dans sa partie située radialement le plus à l'extérieur.

6. Guide courbe selon l'une ou plusieurs des revendications 1 à 5, caractérisé en ce que l'extrémité intérieure de la fente (7) de réception de la bande est élargie en forme circulaire pour recevoir des bandes de différentes épaisseurs.

**Revendications**

1. Guide courbe pour installations à bandes transporteuses, avec une bande transporteuse (1) déviée par des rouleaux de déviation de forme conique, au bord extérieur de laquelle est installée une bordure (3) en forme de bourrelet, guidée entre des rouleaux de guidage (9, 10) disposés par paires, tandis que les axes de rotation des paires de rouleaux de guidage forment entre eux un angle et sont disposés symétriquement par rapport à la bande transporteuse, de telle sorte que les axes de rotation divergent en direction de la bordure extérieure (2) de la bande transporteuse, et que les faces latérales radiales de la bordure, tournées vers l'intérieur, sont soutenues sur les surfaces de roulement des rouleaux de guidage, caractérisé en ce que la bordure (3) est dotée d'une saillie (5) plate et s'étendant sur toute sa longueur, qui prolonge la bordure (3) radialement vers l'intérieur depuis les points d'action des forces des rouleaux de guidage (9, 10), et est dotée d'une fente (7) de réception de la bande s'étendant sur toute la longueur de la bande transporteuse, grâce à laquelle la bande transporteuse est fermement reliée à la bordure.

2. Guide courbe selon la revendication 1, caractérisé en ce que le bourrelet longitudinal (4) de la bordure présente une forme convexe, au moins au voisinage du point d'application des forces.

3. Guide courbe selon la revendication 1 et/ou 2, caractérisé en ce que le bourrelet longitudinal (4) entoure la bordure radiale extérieure (2) de la bande transporteuse (1) et présente une section transversale en substance ovale.

4. Guide courbe selon la revendication 2 ou 3, caractérisé en ce que le bourrelet longitudinal (4) présente au voisinage du point d'application des forces une courbure superficielle moindre, et une section de paroi plus forte que dans ses autres

EP 0 349 830 B1

Fig. 1

Fig. 2

EP 0 349 830 B1